# EUROPÄISCHE PATENTANMELDUNG

(11) **EP 1 953 654 A1**
(43) Veröffentlichungstag der Anmeldung: **06.08.2008**
(21) Anmeldenummer: 07121508.1
(22) Anmeldetag: 26.11.2007
(51) Int. Cl.: G06F 17/30

(54) **Verfahren zur Ermittlung von zumindest zwei ähnlichen Webseiten**

(30) Priorität: 06.12.2006 DE 102006057525
(71) Anmelder: SIEMENS AKTIENGESELLSCHAFT, 80333 München (DE)
(72) Erfinder: Lechner, Stephan, 82110, Germering (DE)

(57) **Zusammenfassung**

Die Erfindung betrifft ein Verfahren zur Ermittlung von zumindest zwei ähnlichen Webseiten (WP1 - WPn), denen unterschiedliche Webadressen (IP1 - IPn) zugeordnet sind und die in Form von Webdaten (WD1 - WDn) auf unterschiedlichen über ein Kommunikationsprotokoll (http), vorzugsweise das Hypertext Transfer Protokoll miteinander verbundenen Computersystemen (C1 -Cn, CS) gespeichert sind. Zunächst werden zumindest der Aufbau, Inhalt und/oder die grafischen Elemente einer Referenzwebseite (RWP) in Form von Referenzdaten (RWD) bestimmt und im Anschluss daran mittels einer Such- und Auswerteroutine (SAR) eine Vielzahl von unterschiedlichen Webseiten (WP1 - WPn) aufgerufen sowie die den aufgerufenen Webseiten (WP1 - WPn) zugeordneten Webdaten (WD1 - WDn) mit den Referenzdaten (RWD) verglichen. Abhängig vom Grad der Übereinstimmung der Webdaten (WD1 - WDn) mit den Referenzdaten (RWD) werden die zur Referenzwebseite (RWP) ähnlichen Webseiten (WP1 - WPn) ermittelt.

## Beschreibung

Die Erfindung betrifft ein Verfahren zur Ermittlung von zumindest zwei ähnlichen Webseiten gemäß dem Oberbegriff des Patentanspruches 1.

Mittels unterschiedlicher Programmiersprachen wie beispielsweise HTML und JAVA können beispielsweise einzelne Bedienelemente einer WWW-Webpage nachgeahmt werden und deren Nutzer somit über den tatsächlichen Status einer Internetverbindung getäuscht werden. Diese im Zusammenhang mit Internetanwendungen auftretende Betrugsmethode ist unter der Bezeichnung "Pishing" bekannt und nimmt in den letzten Jahren ständig zu.

Hierzu werden von Betrügern beispielsweise Emails mit gefälschten Absendernamen an Nutzer von Online-Diensten von beispielsweise Banken oder Finanzdienstleistern versandt, mit welchen die Nutzer aufgefordert werden über einen in der Email aufgeführten "Link" bzw. einen "Uniform Ressource Locator" (URLs) die Webseite der jeweiligen Bank oder des jeweiligen Finanzdienstleisters aufzurufen und sich dort durch Eingabe der persönlichen Zugangsdaten am System zur Nutzung der Online-Dienste anzumelden. Dies wir beispielsweise in der Email dadurch begründet, dass zur Aktualisierung vermeintlich neuer Funktionen ein "Login-Vorgang" erforderlich ist.

Hinter den in den Emails genannten Adressen stehen jedoch gefälschte Webseiten, deren Design den offiziellen Webseiten der Banken oder Finanzdienstleister stark ähnelt, um hierdurch den Eindruck einer offiziellen Seite zu vermitteln und in betrügerische Weise die Zugangsdaten von gutgläubigen Kunden abfragen zu können.

Das genannte Problem wird derzeitig durch allgemeine Aufklärung in den unterschiedlichen Medien sowie mittels Hinweisen auf den Webseiten der Anbieter gelöst, über welche die Nutzer der Webseite bzw. der über diese zur Verfügung gestellten Applikationen darüber informiert werden, dass derartige Emails keinesfalls beantwortet werden sollen, sondern diese nur dem Zweck dienen, personenbezogene oder vertrauliche Daten in betrügerische Weise sich anzueignen.

Um derartige Sicherheitslücken eines Online-Dienstes zu schließen, wird gemäß bekannter Verfahren anstelle einer Authentifizierung mittels Benutzerkennung und Passwort eine Verschlüsselung der Authentifizierungsdaten mittels eines digitalen Zertifikats erfolgen.

Ferner können automatisierte Emailkennungen eingerichtet werden, welche nach Empfang von Pishing-Mails die Versender automatisch abmahnen.

Auch sind "Blacklist"-Ansätze denkbar, bei denen von den betroffenen Firmen die URLs der bereits ermittelten "Pishing"-Websites aufgelistet und den Kunden zur Verfügung gestellt werden.

Ausgehend vom geschilderten Stand der Technik liegt der Erfindung die Aufgabe zugrunde, ein Verfahren zur Ermittlung von Ähnlichkeiten zwischen zumindest zwei graphischen Benutzeroberflächen bereitzustellen, mittels dem derartige "Pishing"-Webseiten ermittelt werden können und geeignete Maßnahmen zum Einstellung des Betriebes eingeleitet werden können.

Die Aufgabe wird durch ein Verfahren gemäß den Merkmalen des Patentanspruches 1 gelöst. Weitere vorteilhafte Ausbildungen der Erfindung sind den abhängigen Ansprüchen zu entnehmen.

Der wesentliche Aspekt des erfindungsgemäßen Verfahrens ist darin zu sehen, dass zumindest der Aufbau, Inhalt und/oder die grafischen Elemente einer Referenzwebseite in Form von Referenzdaten bestimmt werden. Anschließend werden mittels einer Suchroutine eine Vielzahl von unterschiedlichen Webseiten aufgerufen und die den aufgerufenen Webseiten zugeordneten Webdaten mit den Referenzdaten verglichen. Abhängig vom Grad der Übereinstimmung der Webdaten mit den Referenzdaten werden die zur Referenzwebseite ähnlichen Webseiten ermittelt. Mittels des beschriebenen Verfahrens können Webseiten mit starker Ähnlichkeit effizient identifiziert werden und die zugehörigen Service-Provider darüber informiert werden, dass diese in betrügerischer Absicht zu Pishing-Zwecken eingesetzt werden. Besonders vorteilhaft wird die Ähnlichkeit zwischen zweier Webseiten selbst genutzt, um "Phishing-Webseiten" proaktiv identifizieren zu können, anstelle von diesen erst über bereits geschädigte Kunden Kenntnis zu erlangen.

Im Folgenden wird das erfindungsgemäße Verfahren an einem Ausführungsbeispiel anhand der Figuren beschrieben. Hierbei zeigen:
- Figur 1: beispielhaft ein Blockschaltbild eines mehrere Computersysteme aufweisendes Computernetzwerkes und
- Figur 2: beispielhaft in einem Ablaufdiagramm eine Ausführungsform der erfindungsgemäßen Such- und Auswerteroutine.

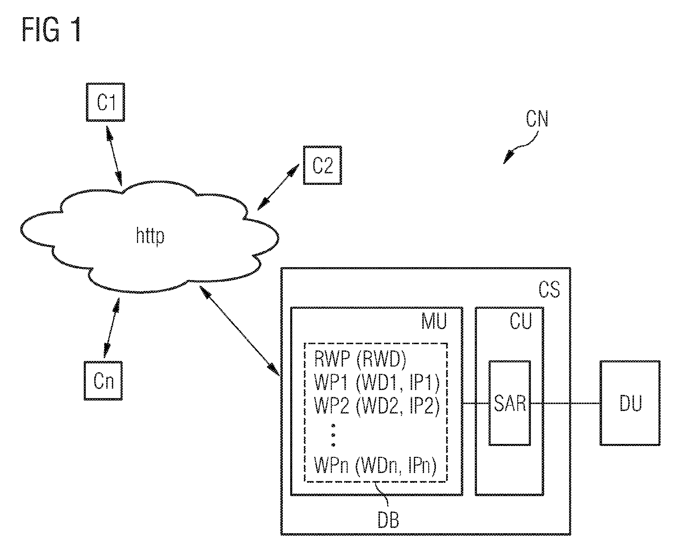

In Figur 1 ist beispielhaft ein Computernetzwerk CN bestehend aus einer Vielzahl von einzelnen Computersystemen C1 - Cn, CS, die jeweils über ein Kommunikationsprotokoll http, vorzugsweise das Hypertext Transfer Protokoll miteinander verbunden sind.

Im Folgenden wird das erfindungsgemäße Verfahren beispielhaft für ein Computersystem CS beschrieben. Das erfindungsgemäße Verfahren ist selbstverständlich nicht auf das vorliegende Computersystem CS bzw. Computernetzwerk CN beschränkt, sondern kann in beliebigen weiteren Computersystemen C1 - Cn oder weiteren Computernetzwerken eingesetzt werden.

Das Computersystem CS weist beispielhaft zumindest eine Steuereinheit CU und zumindest eine mit dieser verbundene Speichereinheit MU auf. Ferner ist an das Computersystem CS zumindest eine Anzeigeneinheit DU, beispielsweise eine Monitoreinheit zur Anzeige von Daten, insbesondere Webdaten WD1 - WDn vorgesehen. Hierbei geben beispielsweise die ersten bis n-ten Webdaten WD1- WDn geben den Aufbau, Inhalt und/oder die grafischen Elemente einer ersten bis n-ten Webseite WP1 - WPn sowie deren Funktionselemente wieder, d.h. werden zur Darstellung der ersten bis n-ten Webseite WP1 - WPn auf einem Webbrowseranwendung, beispielsweise dem Internet Explorer oder Netscape Communicator aufgerufen und/oder in der zugehörigen Steuereinheit CU des Computersystems CS ausgeführt.

Zum Aufruf der ersten bis n-ten Webseite WP1 - WPn über das Kommunikationsprotokoll http ist jeweils einer Webseite WP1 - WPn eine Webadresse IP1 - IPn zugeordnet. Die ersten bis n-ten Webseiten WP1 - WPn bzw. deren Webdaten WD1- WDn können hierbei auf unterschiedlichen Computersystemen C1 - Cn, CS im Computernetzwerk CN gespeichert sein, welche beispielsweise durch unterschiedlich Internet-Serviceprovider betrieben werden.

So kann beispielsweise eine auf einem ersten Computersystem C1 gespeicherte erste Webseite WP1 von einem in betrachteten Computersystem CS ausgeführten Webbroweranwendung über das Kommunikationsprotokoll http geladen und ausgeführt bzw. auf dessen zugeordneter Anzeigeneinheit DU angezeigt werden.

Zur Ermittlung von zumindest zwei ähnlichen auf den Computersystemen C1 - Cn, CS des Computernetzwerkes CN hinterlegten Webseiten WP1 - WPn, denen jeweils unterschiedliche Webadressen IP1 - IPn zugeordnet sind, ist in der Steuereinheit CU zumindest eine Such- und Auswerteroutine SAR vorgesehen.

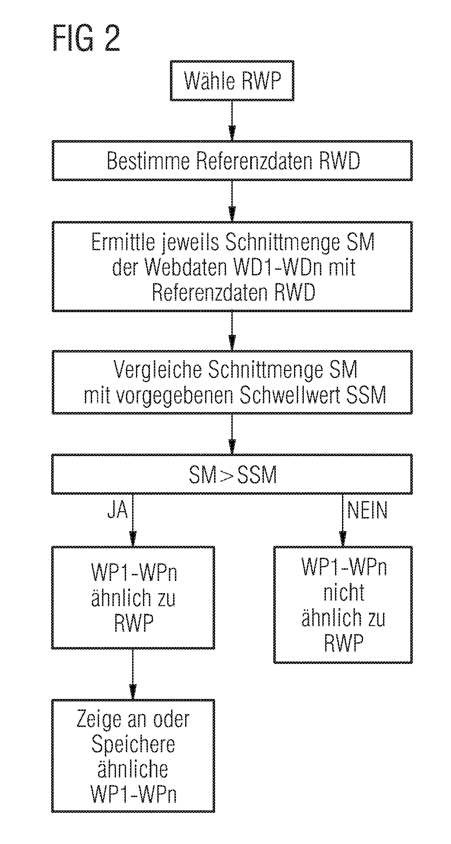

In Figur 2 ist beispielhaft ein Ablaufdiagramm einer derartigen Such- und Auswerteroutine SAR dargestellt.

Hierzu wird zunächst die vor "Pishing"-Angriffe zu schützende Webseite als Referenzwebseite RWP ausgewählt und in der Speichereinheit MU des Computersystems CS gespeichert. Die URL einer derartigen Referenzwebseite RWP könnte beispielsweise www.bank-xyz.de lauten.

Im Anschluss daran werden mittels der Such- und Auswerteroutine SAR zumindest der Aufbau, Inhalt und/oder die grafischen Elemente der Referenzwebseite RWP in Form von zugehörigen Referenzdaten RWD bestimmt und ebenfalls in der Speichereinheit MU gespeichert.

Mittels der Such- und Auswerteroutine SAR werden dann eine Vielzahl von unterschiedlichen Webseiten, insbesondere die im Computernetzwerk CN verfügbaren erste bis n-te Webseite WP1 - WPn aufgerufen und die diesen zugeordneten ersten bis n-ten Webdaten WD1 - WDn mit den zuvor ermittelten Referenzdaten RWD verglichen. Hierdurch werden die zur Referenzwebseite www.bank-xyz.de optische ähnliche Webseiten WP1 - WPn, beispielsweise eine Webseite www.betrugerseite.net gesucht. Die über die Such- und Auswertroutine SAR durchgeführte Suche nach ähnlichen Webseiten WP1 - WPn kann kontinuierlich oder in vorgegeben zeitlichen Abständen durchgeführt werden.

Abhängig vom Grad der Übereinstimmung der Webdaten WD1 - WDn mit den Referenzdaten RWD werden die zur Referenzwebseite RWP ähnlichen Webseiten WP1 - WPn ermittelt. Beispielsweise kann zur Ermittlung des Grades der Übereinstimmung die Schnittmenge SM der jeweiligen Webdaten WD1 - WDn mit den Referenzdaten RWD bestimmt und mit einem Schwellwert SSM verglichen werden, wobei bei einem Überschreiten des Schwellwertes SSM die jeweilige Webseite WP1 - WPn als hochgradig ähnlich zur Referenzwebseite RWP eingestuft wird.

Eine zur Referenzwebseite www bank.--xyz.de ähnliche Webseite www.betrügerseite.net wird somit durch die Such- und Auswertroutine SAR identifiziert, und dem Benutzer des Computersystems CS angezeigt und/oder in einer in der Speichereinheit MU vorgesehenen Datenbank DB gespeichert.

Nach der Identifikation der ähnlichen Webseiten WP1 - WPn werden mittels der Such- und Auswerteroutine SAR die diesen zugeordneten Webadressen IP1 - IPn bestimmt. Zusätzlich kann abhängig von den bestimmten Webadressen IP1 - IPn der ähnlichen Webseiten WP1 - WPn beheimatende Internet-Serviceproviders ermittelt werden. In einer bevorzugten Ausführungsform wird unmittelbar an den ermittelten Internet-Serviceprovider eine Abschaltaufforderung, beispielsweise in Form einer Email gesendet.

Auch kann anhand des ermittelten Internet-Serviceproviders der Betreiber der ähnlichen Webseite WP1 - WPn ermittelt werden und diesem zusätzlich oder alternativ eine Abschaltaufforderung gesendet werden. Die Durchführung der Abschaltung kann durch erneuten Aufruf der ähnlichen Webseite WP1 - WPn innerhalb eines vorgegeben Zeitraums mittels der Such- und Auswerteroutine SAR überprüft werden.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrunde liegende Erfindungsgedanke verlassen wird.

## Patentansprüche

1. Verfahren zur Ermittlung von zumindest zwei ähnlichen Webseiten (WP1 - WPn), denen unterschiedliche Webadressen (IP1 - IPn) zugeordnet sind und die in Form von Webdaten (WD1 - WDn) auf unterschiedlichen über ein Kommunikationsprotokoll (http), vorzugsweise das Hypertext Transfer Protokoll miteinander verbundenen Computersystemen (C1 -Cn, CS) gespeichert sind,
**dadurch gekennzeichnet,**
**dass** zumindest der Aufbau, Inhalt und/oder die grafischen Elemente einer Referenzwebseite (RWP) in Form von Referenzdaten (RWD) bestimmt werden,
**dass** mittels einer Such- und Auswerteroutine (SAR) eine Vielzahl von unterschiedlichen Webseiten (WP1 - WPn) aufgerufen und die den aufgerufenen Webseiten (WP1 - WPn) zugeordneten Webdaten (WD1 - WDn) mit den Referenzdaten (RWD) verglichen werden und
**dass** abhängig vom Grad der Übereinstimmung der Webdaten (WD1 - WDn) mit den Referenzdaten (RWD) die zur Referenzwebseite (RWP) ähnlichen Webseiten (WP1 - WPn) ermittelt werden.

2. Verfahren nach Anspruch 1,
**dadurch gekennzeichnet,**
**dass** die Webadressen (IP1 - IPn) der ermittelten ähnlichen Webseiten (WP1 - WPn) mittels der Such- und Auswerteroutine (SAR) bestimmt werden.

3. Verfahren nach Anspruch 1 oder 2,
**dadurch gekennzeichnet,**
**dass** die ähnlichen Webseiten (WP1 - WPn) einem Benutzer angezeigt und/oder in einer Datenbank gespeichert werden.

4. Verfahren nach einem der Ansprüche 1 bis 3,
**dadurch gekennzeichnet,**
**dass** zur Ermittlung des Grades der Übereinstimmung die Schnittmenge (SM) der jeweiligen Webdaten (WD1 - WDn) mit den Referenzdaten (RWD) bestimmt und mit einem Schwellwert (SSM) verglichen wird, wobei bei einem Überschreiten des Schwellwertes (SSM) die jeweilige Webseite (WP1 - WPn) als hochgradig ähnlich zur Referenzwebseite (RWP) eingestuft wird.

5. Verfahren nach einem der Ansprüche 2 bis 4,
**dadurch gekennzeichnet,**
**dass** abhängig von der ermittelten Webadresse (IP1 - IPn) der Internet-Serviceprovider der zugeordneten Webseite (WP1 - WPn) ermittelt wird.

6. Verfahren nach Anspruch 5,
**dadurch gekennzeichnet,**
**dass** an den Internet-Serviceprovider der zugeordneten Webseite (WP1 - WPn) der ermittelten Webseite eine Abschaltaufforderung gesendet wird.

7. Verfahren nach Anspruch 5 oder 6,
**dadurch gekennzeichnet,**
**dass** über den Internet-Serviceprovider der Betreiber der ähnlichen Webseite (WP1 - WPn) ermittelt wird.

8. Verfahren nach Anspruch 7,
**dadurch gekennzeichnet,**
**dass** an den Betreiber der ähnlichen Webseite (WP1 - WPn) eine Abschaltaufforderung gesendet wird.

9. Verfahren nach einem der Ansprüche 1 bis 8,
**dadurch gekennzeichnet,**
**dass** die Suche nach ähnlichen Webseiten (WP1 - WPn) kontinuierlich oder in vorgegebenen zeitlichen Abständen ausgeführt wird.
